# EUROPEAN PATENT APPLICATION

(11) **EP 4 780 125 A1**
(43) Date of publication of application: **22.07.2026**
(21) Application number: 24876422.7
(22) Date of filing: 27.09.2024
(51) Int. Cl.: H04W 74/0833, H04B 7/185

(54) **BEAM RECOVERY METHOD AND COMMUNICATION APPARATUS**

(30) Priority: 11.10.2023 CN 202311315593
(71) Applicant: HUAWEI TECHNOLOGIES CO., LTD., Shenzhen 518129 (CN)
(72) Inventor: KONG, Chuili, Shenzhen, Guangdong 518129 (CN); WANG, Xiaolu, Shenzhen, Guangdong 518129 (CN); LUO, Hejia, Shenzhen, Guangdong 518129 (CN); WANG, Jun, Shenzhen, Guangdong 518129 (CN)
(74) Representative: Goddar, Heinz J.
(86) International application number: PCT/CN2024/121888
(87) International publication number: WO 2025/077605

(57) **Abstract**

Disclosed are a beam recovery method and a communication apparatus. In the method, a terminal device obtains a first parameter and a second parameter, and receives a reference signal through a first beam pair; the terminal device performs beam recovery with a first satellite through a second beam pair if the received reference signal meets a first condition determined based on the first parameter but does not meet a second condition determined based on the second parameter; and the terminal device sends an access request to a second satellite if the received reference signal meets both the first condition and the second condition. By using this method, the terminal device may quickly select a beam recovery strategy based on the first condition and the second condition. It can decide whether to switch beam pairs on a same satellite or switch to another satellite for communication. This prevents the terminal device from continuously sending access requests to a currently serving satellite when there is actually an obstruction between the two that prevents communication. Otherwise, this would increase power consumption for the terminal device and interfere with other uplink signals.

## Description

### CROSS-REFERENCE TO RELATED APPLICATIONS

This application claims priority to Chinese Patent Application No. 202311315593.6, filed with the China National Intellectual Property Administration on October 11, 2023 and entitled "BEAM RECOVERY METHOD AND COMMUNICATION APPARATUS", which is incorporated herein by reference in its entirety.

### TECHNICAL FIELD

Embodiments of this application relate to the field of wireless communication, and in particular, to a beam recovery method and a communication apparatus.

### BACKGROUND

Satellite communication presents unique advantages over terrestrial communication. For example, satellite communication can provide wider coverage, and satellite base stations are more resilient to natural disasters or external forces. Integrating satellite communication into future 5G communication systems could extend services to areas beyond the reach of terrestrial communication networks, like oceans or forests. It would enhance reliability of 5G communication systems, for example, ensuring better service for users on airplanes or trains. Additionally, it would provide more data transmission resources and increase network speeds. Therefore, supporting both the terrestrial communication and satellite communication is a promising direction for the future 5G communication systems, with substantial gains in terms of wide coverage, reliability, multi-connection, high throughput, and the like.

Satellite communication has been incorporated into the 3GPP specifications as a 5G communication scenario. In the specifications, to adapt to characteristics of high latency and high mobility, enhancements have been made to technologies like timing, synchronization, and HARQ. However, existing beam recovery methods for terrestrial communication are not fully suitable for satellite communication. Figuring out beam recovery for satellite communication is a technical challenge that the industry is facing now.

### SUMMARY

This application provides a beam recovery method and a communication apparatus, to implement beam recovery when a beam failure occurs in a satellite communication system.

According to a first aspect, an embodiment of this application provides a beam recovery method. The method may be performed by a terminal device. The terminal device herein may be a terminal device itself, or may be a processor, a module, a chip, a chip system, or the like that is in a terminal device and that implements the method. The method includes: The terminal device obtains a first parameter and a second parameter; the terminal device receives a reference signal through a first beam pair; the terminal device performs beam recovery with the first satellite through a second beam pair if the reference signal meets a first condition determined based on the first parameter but does not meet a second condition determined based on the second parameter; and the terminal device sends an access request to a second satellite if the reference signal meets both the first condition and the second condition.

In the foregoing method, beam recovery can be quickly performed when a beam failure occurs in a satellite communication system. Specifically, the terminal device may quickly select a beam recovery strategy, based on the first condition determined based on the first parameter and the second condition determined based on the second parameter. It can decide whether to switch beam pairs on a same satellite or switch to another satellite for communication. This prevents the terminal device from continuously sending access requests to a currently serving satellite when there is actually an obstruction between the two that prevents communication. Otherwise, this would increase power consumption of the terminal device and interfere with other uplink signals.

In a possible implementation, the first parameter is a first threshold; and the first condition is that a received power of the reference signal is less than or equal to the first threshold. In this implementation, the terminal device can select a beam recovery strategy based on the received power of the reference signal.

In a possible implementation, the second parameter is a second threshold of a reference signal received power, and the first threshold is greater than the second threshold; and the second condition is that the received power of the reference signal is less than or equal to the second threshold. In this implementation, the terminal device can select a beam recovery strategy based on the received power of the reference signal. This prevents the terminal device from continuously sending access requests to a currently serving satellite when there is actually an obstruction between the two that prevents communication. Otherwise, this would increase power consumption for the terminal device and interfere with other uplink signals.

In a possible implementation, the reference signal includes a synchronization signal block SSB and/or a channel state information reference signal CSI-RS.

In a possible implementation, the second parameter is a first time window; and the second condition is that a reception time of the reference signal is in the first time window. In this implementation, the terminal device can select a beam recovery strategy based on the time window. This prevents the terminal device from continuously sending access requests to a currently serving satellite when there is actually an obstruction between the two that prevents communication. Otherwise, this would increase power consumption of the terminal device and interfere with other uplink signals.

In a possible implementation, the first time window includes a start time and an end time, or includes a start time and a duration of the first time window, or includes a start time offset and an end time offset; and the start time offset indicates a difference between the start time of the first time window and a first reference time, and the end time offset indicates a difference between the end time of the first time window and the first reference time.

In a possible implementation, the second parameter is a range of elevation angles formed between the terminal device and the first satellite; and the second condition is that an elevation angle formed between the terminal device and the first satellite when the reference signal is received is within the range. In this implementation, the terminal device can select a beam recovery strategy based on the elevation angle. This prevents the terminal device from continuously sending access requests to a currently serving satellite when there is actually an obstruction between the two that prevents communication. Otherwise, this would increase power consumption for the terminal device and interfere with other uplink signals.

In a possible implementation, the range includes a start angle and an end angle for the elevation angle, or a start angle offset and an end angle offset; and the start angle offset indicates an offset between the start angle of the range and a first reference elevation angle, and the end angle offset indicates an offset between the end angle of the range and the first reference elevation angle.

In a possible implementation, the second parameter is a start threshold of a first timer and a duration of the first timer, and the threshold is a threshold of an elevation angle between the terminal device and the first satellite; and the second condition is that the first timer is running at the moment the terminal device receives the reference signal. In this implementation, the terminal device can select a beam recovery strategy based on the first timer. This prevents the terminal device from continuously sending access requests to a currently serving satellite when there is actually an obstruction between the two that prevents communication. Otherwise, this would increase power consumption for the terminal device and interfere with other uplink signals.

In a possible implementation, that the terminal device obtains the first parameter and the second parameter includes: The terminal device receives beam failure recovery BFR information sent by the first satellite, where the BFR information includes the first parameter and the second parameter.

In a possible implementation, the second satellite operates at a higher altitude than the first satellite.

In a possible implementation, the method further includes: The terminal device obtains a first quantity threshold; and that the terminal device performs beam recovery with the first satellite through the second beam pair if the reference signal meets the first condition determined based on the first parameter but does not meet the second condition determined based on the second parameter includes: The terminal device performs beam recovery with the first satellite through the second beam pair if a quantity of reference signals that meet the first condition but do not meet the second condition and that are received by the terminal device within a first time reaches the first quantity threshold.

In a possible implementation, the method further includes: The terminal device obtains a second quantity threshold; and that the terminal device sends the access request to the second satellite if the reference signal meets both the first condition and the second condition includes: The terminal device sends the access request to the second satellite if a quantity of reference signals that meet both the first condition and the second condition and that are received by the terminal device within a second time reaches the second quantity threshold.

According to a second aspect, an embodiment of this application provides a beam recovery method. The method may be performed by a first satellite. The first satellite herein may be a satellite itself, or may be a processor, a module, a chip, a chip system, or the like that is in a satellite and that implements the method. The method includes: The first satellite sends a first parameter and a second parameter to a terminal device, where the first parameter is used to determine a first condition, and the second parameter is used to determine a second condition; and the first satellite sends a reference signal to the terminal device through a first beam pair, where the reference signal, the first condition, and the second condition are used by the terminal device to perform satellite beam recovery.

In a possible implementation, the method further includes: The first satellite performs beam recovery with the terminal device through a second beam pair if the reference signal received by the terminal device meets the first condition but does not meet the second condition.

In a possible implementation, the reference signal, the first condition, and the second condition are specifically used to: enable the terminal device to send an access request to the first satellite through the second beam pair if the reference signal received by the terminal device meets the first condition but does not meet the second condition; or enable the terminal device to send an access request to the second satellite if the reference signal received by the terminal device meets both the first condition and the second condition.

In a possible implementation, the first parameter is a first threshold; and the first condition is that a received power of the reference signal is less than or equal to the first threshold.

In a possible implementation, the second parameter is a second threshold of a reference signal received power, and the first threshold is greater than the second threshold; and the second condition is that the received power of the reference signal is less than or equal to the second threshold.

In a possible implementation, the reference signal includes a synchronization signal block SSB and/or a channel state information reference signal CSI-RS.

In a possible implementation, the second parameter is a first time window; and the second condition is that a reception time of the reference signal is in the first time window.

In a possible implementation, the first time window includes a start time and an end time, or includes a start time and a duration of the first time window, or includes a start time offset and an end time offset; and the start time offset indicates a difference between the start time of the first time window and a first reference time, and the end time offset indicates a difference between the end time of the first time window and the first reference time.

In a possible implementation, the second parameter is a range of elevation angles formed between the terminal device and the first satellite; and the second condition is that an elevation angle formed between the terminal device and the first satellite when the reference signal is received is within the range.

In a possible implementation, the range includes a start angle and an end angle for the elevation angle, or a start angle offset and an end angle offset; and the start angle offset indicates an offset between the start angle of the range and a first reference elevation angle, and the end angle offset indicates an offset between the end angle of the range and the first reference elevation angle.

In a possible implementation, the second parameter is a start threshold of a first timer and a duration of the first timer, and the threshold is a threshold of an elevation angle between the terminal device and the first satellite; and the second condition is that the first timer is running at the moment the terminal device receives the reference signal.

In a possible implementation, that the first satellite sends the first parameter and the second parameter includes: The first satellite sends beam failure recovery BFR information, where the BFR information includes the first parameter and the second parameter.

In a possible implementation, the second satellite operates at a higher altitude than the first satellite.

In a possible implementation, the method further includes: The first satellite sends a first quantity threshold to the terminal device; and that the reference signal received by the terminal device meets the first condition but does not meet the second condition includes: A quantity of reference signals that meet the first condition but do not meet the second condition and that are received by the terminal device within a first time reaches the first quantity threshold.

In a possible implementation, the method further includes: The first satellite sends a second quantity threshold to the terminal device; and that the reference signal received by the terminal device meets both the first condition and the second condition includes: A quantity of reference signals that meet both the first condition and the second condition and that are received by the terminal device within a second time reaches the second quantity threshold.

According to a third aspect, an embodiment of this application provides a communication apparatus. The communication apparatus includes a processor. The processor is coupled to a memory, and the memory is configured to store a program or instructions. When the program or the instructions are executed by the processor, the apparatus is enabled to perform the method in the first aspect and any one of the possible implementations of the first aspect.

According to a fourth aspect, an embodiment of this application provides a communication apparatus. The communication apparatus includes a processor. The processor is coupled to a memory, and the memory is configured to store a program or instructions. When the program or the instructions are executed by the processor, the apparatus is enabled to perform the method in the second aspect and any one of the possible implementations of the second aspect.

According to a fifth aspect, a communication system is provided, including the communication apparatus in the fourth aspect and at least one communication apparatus in the fifth aspect.

According to a sixth aspect, an embodiment of this application provides a chip, including a processor. The processor is coupled to a memory, and the memory is configured to store instructions. When the instructions are executed by the processor, the chip is enabled to implement the method in the first aspect and any one of the implementations of the first aspect, or implement the method in the second aspect and any one of the implementations of the second aspect.

According to a seventh aspect, an embodiment of this application provides a computer-readable storage medium. The computer-readable storage medium stores instructions. When the instructions are run on a computer, the computer is enabled to perform the method in the first aspect and any one of the implementations of the first aspect, or perform the method in the second aspect and any one of the implementations of the second aspect.

According to an eighth aspect, an embodiment of this application provides a computer program product including instructions. When the instructions are run on a computer, the computer is enabled to perform the method in the first aspect and any one of the implementations of the first aspect, or perform the method in the second aspect and any one of the implementations of the second aspect.

### BRIEF DESCRIPTION OF DRAWINGS

FIG. 1a, FIG. 1b, and FIG. 1c are diagrams of architectures of a satellite communication system according to an embodiment of this application;
FIG. 2 is a diagram of an architecture of a multi-layer satellite communication system according to an embodiment of this application;
FIG. 3 is a schematic flowchart of a beam recovery method according to an embodiment of this application;
FIG. 4 is a schematic flowchart of a beam recovery method according to an embodiment of this application;
FIG. 5 is a schematic flowchart of a beam recovery method according to an embodiment of this application;
FIG. 6 is a diagram of an elevation angle range according to an embodiment of this application;
FIG. 7 is a schematic flowchart of a beam recovery method according to an embodiment of this application;
FIG. 8 is a schematic flowchart of a beam recovery method according to an embodiment of this application;
FIG. 9 is a diagram of a structure of a communication apparatus according to an embodiment of this application; and
FIG. 10 is a diagram of a structure of a communication apparatus according to an embodiment of this application.

### DESCRIPTION OF EMBODIMENTS

The core of beam management is to manage scanning, reporting, and maintenance of a static beam and select an appropriate static beam for each channel, thereby improving cell coverage and reducing system overheads.

For a new radio (new radio, NR) system, beam management may include the following steps: (1) Beam scanning: A base station sends reference signal beams, and performs spatial scanning at a predefined time interval; (2) Beam measurement/decision: A UE measures these reference signals and selects a beam with good communication quality; (3) Beam reporting: The UE reports a beam measurement result; (4) Beam indication: The base station indicates the UE to select a specified beam for communication; (5) Beam failure recovery: includes beam failure detection, new beam discovery, and beam recovery.

If a serving beam of the UE is blocked, in the foregoing step (3), the UE cannot report a measured new beam that can meet a communication condition, resulting in a traffic decrease or even a call drop. Therefore, a beam recovery mechanism is introduced in the NR system. The UE selects a candidate beam for recovery, and sends an access preamble to the base station through the candidate beam. In other words, the UE accesses the base station through the selected candidate beam. This enables the UE to quickly obtain another available serving beam, thereby enhancing beam robustness.

However, a non-terrestrial network (non-terrestrial network, NTN) system (for example, a satellite communication system) differs significantly from a terrestrial communication system (for example, an NR system). For example, for the satellite communication system, beam management is typically independent of location information of the base station and the UE, with their behavior and decisions based primarily on signal quality. In contrast, in the satellite communication system, a communication protocol supports delivering a satellite ephemeris to the UE and the UE reporting global navigation satellite system (global navigation satellite system, GNSS) information to a satellite, allowing both the satellite and the UE to perform beam management based on the location information. Additionally, in the NR system, if communication through a line-of-sight (LOS) beam fails, communication may be recovered through a non-line-of-sight (NLOS) beam. However, the satellite communication system has strong LOS characteristics, making it difficult to recover communication through the NLOS beam.

Therefore, traditional beam recovery mechanisms from the conventional terrestrial communication system do not work well for the satellite communication system. Figuring out how to perform beam recovery in the case of beam failure is a key issue that the industry is facing now.

In view of this, an embodiment of this application provides a beam recovery method, to implement beam recovery when a beam failure occurs in a satellite communication system.

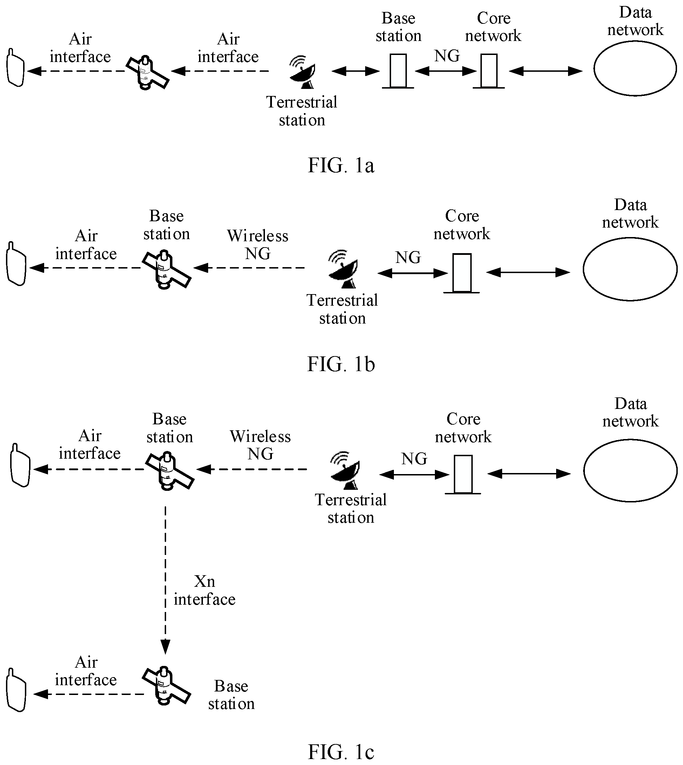

FIG. 1a, FIG. 1b, and FIG. 1c provide examples of possible application architectures of satellite communication. A positioning method provided in embodiments of this application can be applied to any one of the network architectures shown in FIG. 1a, FIG. 1b, and FIG. 1c.

In the architecture shown in FIG. 1a, a base station is deployed on the ground, a satellite is connected to a terrestrial station through an air interface, and the terrestrial station may be connected to the base station through a wireless or wired link. A terminal device on the ground accesses a mobile communication network through an air interface (which can be of various types, for example, a 5G air interface), and the satellite is used as a transmission node to forward information of the terminal device.

In the architecture shown in FIG. 1b, a base station is deployed on a satellite, the satellite is connected to a terrestrial station through an air interface, and the terrestrial station may be connected to a core network through a wireless or wired link. A terminal device on the ground communicates with the satellite base station through the air interface, to access a mobile communication network. As a base station, the satellite is connected to the terrestrial station through an NG interface of the air interface, and the terrestrial station is connected to the core network through the NG interface. The NG interface may be in a wireless form or a wired form.

In comparison with the architecture shown in FIG. 1b, the architecture shown in FIG. 1c has an additional communication scenario between satellite base stations. Specifically, the satellite base stations may communicate with each other through an Xn interface.

In FIG. 1a to FIG. 1c, the terminal device may include various types of terminal devices that support new radio, for example, a mobile phone, a tablet computer, a vehicle-mounted terminal device, and a wearable terminal device. The terminal device may access a satellite network through the air interface and initiates services such as calls and internet access.

The base station is mainly configured to provide a radio access service, schedule a radio resource to a connected terminal device, provide a reliable radio transmission protocol and data encryption protocol, and the like. In the architecture shown in FIG. 1a, the satellite does not possess a function of the base station; instead, it relays communication between the terminal and the base station. In FIG. 1b and FIG. 1c, the satellite functions as the base station and is capable of providing a wireless access service.

The core network is mainly configured to provide functions such as user access control, mobility management, session management, user security authentication, and charging. The core network includes a plurality of functional units, which may be classified into a control plane functional entity and a data plane functional entity. An access and mobility management function (access and mobility management function, AMF) entity is responsible for user access management, security authentication, mobility management, and the like. A user plane unit (user plane function, UPF) entity is responsible for managing functions such as user plane data transmission, traffic statistics collection, and security eavesdropping.

The terrestrial station is mainly responsible for forwarding signaling and service data between the satellite and the base station or between the satellite and the core network.

The air interface indicates a radio link between the terminal device and the base station.

The Xn interface indicates an interface between the satellite base stations, and is mainly used for signaling exchange such as switching.

The NG interface indicates an interface between the base station and the core network, an interface between the terrestrial station and the core network, or an interface (which is a radio link in this case) between the satellite base station and the terrestrial station, and is mainly for exchanging signaling such as NAS of the core network and service data of a user.

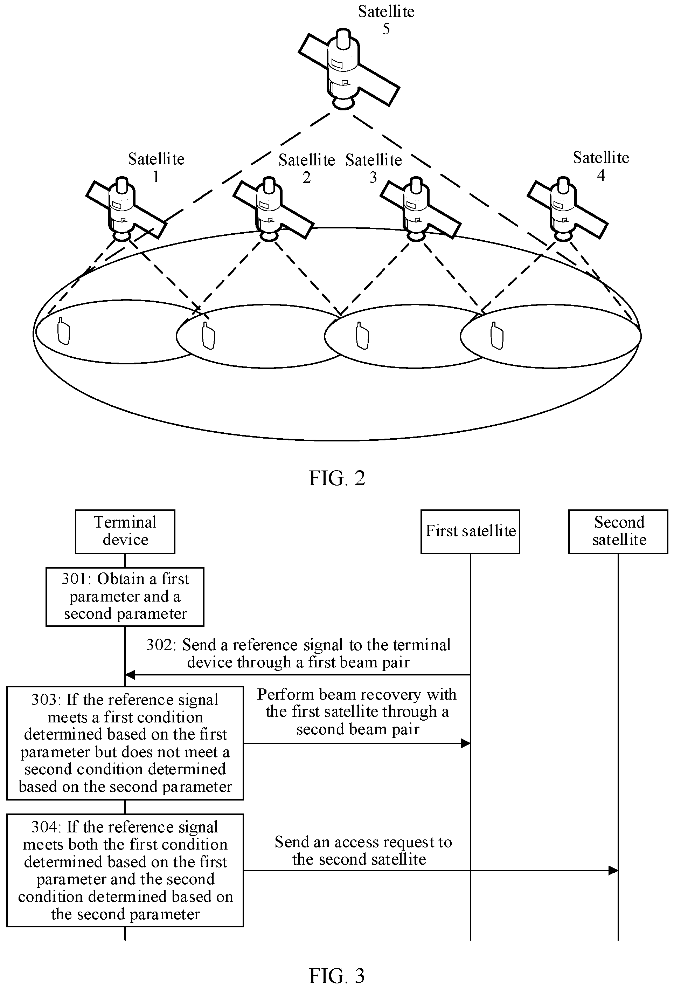

In addition, there may be multi-layer satellite deployment as a quantity of communication satellites increased. In a specific example shown in FIG. 2, a satellite 1, a satellite 2, a satellite 3, and a satellite 4 are deployed at a same layer, that is, altitudes of the satellite 1, the satellite 2, the satellite 3, and the satellite 4 are basically the same. The satellite 5 operates at a higher altitude than other satellites, creating a multi-layer structure with the other satellites.

A schematic flowchart of a beam recovery method provided in an embodiment of this application may be shown in FIG. 3. The method includes the following steps.

Step 301: A terminal device obtains a first parameter and a second parameter.

The first parameter is used to determine a first condition, the second parameter is used to determine a second condition, and the first condition and the second condition are used to perform beam switching.

In a possible implementation, the first parameter and the second parameter may be sent by a first satellite to the terminal device. The first satellite may send a message carrying both the first parameter and the second parameter to the terminal device, or the first satellite may separately send the first parameter and the second parameter to the terminal device through different messages. The first satellite may send the first parameter and the second parameter to the terminal device through a system message, or the first satellite may send the first parameter and the second parameter to the terminal device through a dedicated message of the terminal device.

In a specific embodiment, the first satellite may send beam failure recovery (beam failure recovery, BFR) information including the first parameter and the second parameter to the terminal device. Additionally, the BFR information may further include a candidate beam list, another parameter, and the like.

In another possible implementation, the first parameter and the second parameter may alternatively be preconfigured in the terminal device. The terminal device may read the first parameter and the second parameter from a storage medium of the terminal device, and determine a corresponding first condition and a corresponding second condition based on the first parameter and the second parameter.

Step 302: The first satellite sends a reference signal to the terminal device through a first beam pair.

Correspondingly, the terminal device receives the reference signal through the first beam pair.

The beam pair includes a transmit beam and a receive beam, for example, a transmit beam used by the first satellite to send a signal and a receive beam used by the terminal device to receive the signal, or a transmit beam used by the terminal device to send a signal and a receive beam used by the first satellite to receive the signal. A beam pair used for uplink transmission and a beam pair used for downlink transmission may be the same or may be different. When different beam pairs are used for uplink transmission and downlink transmission, the first beam pair is a beam pair currently used for downlink transmission between the terminal device and the first satellite.

Optionally, the reference signal may include a synchronization signal and physical broadcast channel block (synchronization signal and PBCH block, SSB), or a channel state information reference signal (channel state information reference signal, CSI-RS), or both an SSB and a CSI-RS.

Step 303: The terminal device performs beam recovery with the first satellite through a second beam pair if the reference signal meets the first condition determined based on the first parameter but does not meet the second condition determined based on the second parameter.

The second beam pair and the first beam pair are different beam pairs. Both beams used by the terminal device and the first satellite in the second beam pair may be different from beams used by the terminal device and the first satellite in the first beam pair. Alternatively, it could be that only the terminal device uses a different beam, or that only the first satellite uses a different beam.

If the terminal device determines that the received reference signal meets the first condition but does not meet the second condition, it may be considered that quality of communication between the terminal device and the first satellite through the first beam pair is poor, and the terminal device may switch the beam pair for communication with the first satellite, that is, the terminal device performs beam recovery with the first satellite. When the terminal device determines to switch the beam pair for communication with the first satellite, the terminal device may send an access request to the first beam through the second beam pair, implementing beam pair switching with the first satellite. Alternatively, the terminal device may train the beam pair in advance and wirelessly send an access request to quickly implement beam switching.

Optionally, the terminal device may further obtain a first quantity threshold. In this case, when the terminal device performs step 303, the terminal device sends an access request to the first satellite through the second beam pair if a quantity of reference signals that meet the first condition but do not meet the second condition, that are sent by the first satellite through the first beam pair, and that are received by the terminal device within a first time reaches the first quantity threshold.

The first quantity threshold may be sent by the first satellite to the terminal device, or may be preconfigured in the terminal device. For example, the first satellite may send the BFR information including the first quantity threshold and the first parameter to the terminal device. The first time may be preconfigured in the terminal device, or may be sent by the first satellite to the terminal device.

Step 304: The terminal device sends an access request to the second satellite if the reference signal meets the first condition determined based on the first parameter and the second condition determined based on the second parameter.

If the terminal device determines that the received reference signal meets both the first condition and the second condition, it may be considered that the terminal device does not have a communication condition with the first satellite. Even if the terminal device switches to another beam pair for communication, it is difficult to meet a communication requirement. Therefore, the terminal device may request to access the second satellite, thereby meeting the communication requirement of the terminal device.

The second satellite and the first satellite are different communication satellites. Optionally, the second satellite may be a high-layer satellite, that is, an altitude of the second satellite is higher than that of the first satellite. Alternatively, the second satellite may be a satellite at a same layer as the first satellite, that is, an altitude of the second satellite is basically the same as that of the first satellite. The satellite 1, the satellite 2, the satellite 3, and the satellite 4 shown in FIG. 2 may be referred to as satellites at a same layer.

Optionally, the terminal device may further obtain a second quantity threshold. In this case, when the terminal device performs step 304, the terminal device sends an access request to the second satellite if a quantity of reference signals that meet both the first condition and the second condition, that are sent by the first satellite through the first beam pair, and that are received by the terminal device within a second time reaches the second quantity threshold.

The second quantity threshold may be sent by the first satellite to the terminal device, or may be preconfigured in the terminal device. For example, the first satellite may send the BFR information including the second quantity threshold and the second parameter to the terminal device. The second time may be preconfigured in the terminal device, or may be sent by the first satellite to the terminal device. The second quantity threshold and the first quantity threshold may be same or may be different, and the second time and the first time may be same or may be different.

In a possible implementation, the first parameter may be a first threshold of a reference signal received power. Correspondingly, the first condition determined based on the first parameter is that a received power of the terminal device for the reference signal is less than or equal to the first threshold. For example, the first parameter includes a reference signal received power

(reference signal receiving power, RSRP) threshold of the SSB. In step 302, the first satellite sends the SSB. If a received power of the terminal device for the SSB is less than an RSRP threshold of the SSB, it indicates that the first condition is met. For another example, the first parameter includes an RSRP threshold of the SSB and an RSRP threshold of the CSI-RS. The terminal device receives the SSB and the CSI-RS sent by the first satellite. If a received power of the terminal device for the SSB is less than the RSRP threshold of the SSB, and a received power of the terminal device for the CSI-RS is less than the RSRP threshold of the CSI-RS, it indicates that the first condition is met.

For the second parameter, this embodiment of this application provides a plurality of implementations, and the following separately describes the implementations.

In an implementation 1, the second parameter may be a second threshold of a reference signal received power. Correspondingly, the second condition determined based on the second parameter is that a received power of the terminal device for the reference signal is less than or equal to the second threshold, where the second threshold is less than the first threshold. For example, the first parameter includes a first RSRP threshold of the SSB, the second parameter includes a second RSRP threshold of the SSB, and the first satellite sends the SSB. If a received power of the terminal device for the SSB is greater than the first RSRP threshold, neither the first condition nor the second condition is met; if a received power of the terminal device for the SSB is less than the first RSRP threshold but greater than the second RSRP threshold, the first condition is met but the second condition is not met; or if a received power of the terminal device for the SSB is less than the second RSRP threshold, both the first condition and the second condition are met.

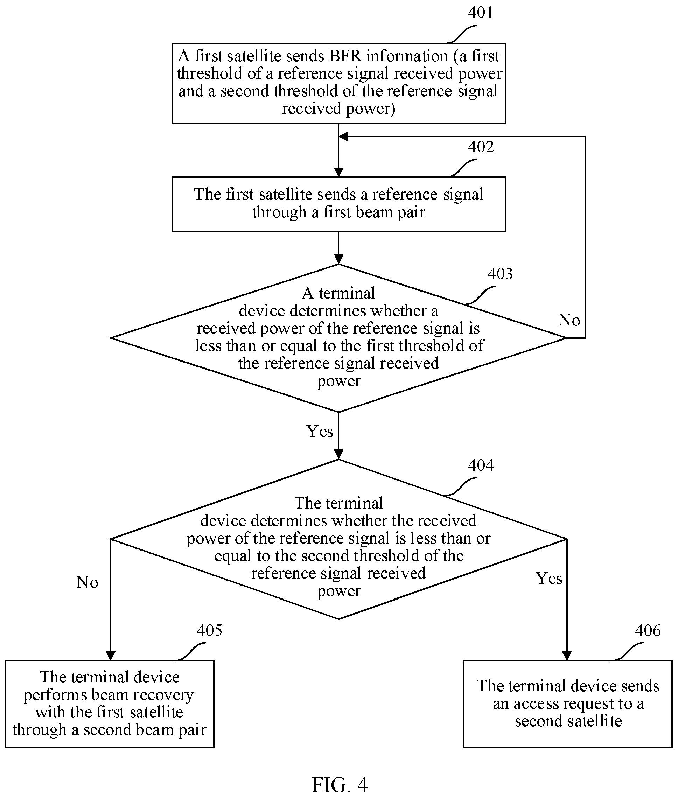

In a specific embodiment, the first parameter is a first threshold of the reference signal received power, and the second parameter is a second threshold of the reference signal received power. In this case, the beam recovery method provided in this embodiment of this application may be shown in FIG. 4.

Step 401: A first satellite sends BFR information, where the BFR information includes a first threshold of a reference signal received power and a second threshold of the reference signal received power.

The first threshold of the reference signal received power is the first parameter, and the second threshold of the reference signal received power is the second parameter. Correspondingly, a first condition is that a received power of a reference signal is less than or equal to the first threshold of the reference signal received power, and a second condition is that a received power of a reference signal is less than or equal to the second threshold of the reference signal received power.

The reference signal may include an SSB and/or a CSI-RS.

Optionally, the BFR information may include a candidate beam list, and may further include a first threshold quantity and a second threshold quantity.

Optionally, the BFR information may alternatively not include the first parameter and the second parameter, or the first satellite does not perform step 401, but pre-configures the first parameter and the second parameter in a terminal device.

Step 402: The first satellite sends the reference signal through a first beam pair.

The first beam pair is a beam pair used for downlink transmission between the current terminal device and the first satellite.

The reference signal sent by the first satellite in this step corresponds to the first parameter and the second parameter. For example, if the first parameter and the second parameter are respectively a first threshold of a received power of the SSB and a second threshold of the received power of the SSB, the reference signal sent by the first satellite in step 402 is the SSB; or if the first parameter and the second parameter are respectively a first threshold of a received power of the CSI-RS and a second threshold of the received power of the CSI-RS, the reference signal sent by the first satellite in step 402 is the CSI-RS.

Step 403: The terminal device determines whether the received power of the reference signal is less than or equal to the first threshold of the reference signal received power.

The terminal device determines whether the received reference signal meets the first condition, that is, whether the received power of the reference signal is less than or equal to the first threshold of the reference signal received power.

If the received reference signal does not meet the first condition, it is considered that the currently used first beam pair can meet a communication requirement of the terminal device, and beam pair switching does not need to be performed. It should be understood that step 402 and step 403 may be repeatedly performed until the reference signal received by the terminal device meets the first condition.

If the received reference signal meets the first condition, it is considered that the currently used first beam pair cannot meet a communication requirement of the terminal device, and beam pair switching needs to be performed, and step 404 continues to be performed.

When the terminal device further obtains a first quantity threshold, in step 403, the terminal device specifically determines whether a quantity of reference signals whose received powers each are less than or equal to the first threshold and that are received within a first time reaches the first quantity threshold.

Step 404: The terminal device determines whether the received power of the reference signal is less than or equal to the second threshold of the reference signal received power.

The terminal device determines whether the received reference signal meets the second condition, that is, whether the received power of the reference signal is less than or equal to the second threshold of the reference signal received power.

If the received reference signal does not meet the second condition, it is considered that the terminal device may attempt to switch to another beam of the first satellite for communication. Although the currently used first beam pair cannot meet a communication requirement of the terminal device, another beam pair with the first satellite may meet the communication requirement of the terminal device. In this case, step 405 is performed.

If the received reference signal meets the second condition, it is considered that all beam pairs between the terminal device and the first satellite cannot meet a communication requirement of the terminal device, and the terminal device needs to switch to another satellite for communication. In this case, the terminal device performs step 406.

When the terminal device further obtains a second quantity threshold, in step 404, the terminal device specifically determines whether a quantity of reference signals whose received powers each are less than or equal to the second threshold and that are received within a second time reaches the second quantity threshold.

Step 405: The terminal device performs beam recovery with the first satellite through a second beam pair.

Optionally, the terminal device sends an access request to the first satellite through the second beam pair, so that the terminal device communicates with the first satellite through the second beam pair, and does not perform communication through the first beam pair that is blocked and has poor communication quality, thereby improving communication quality of the terminal device, and meeting the communication requirement of the terminal device. Alternatively, the terminal device may train the beam pair in advance and wirelessly send an access request to quickly implement beam switching.

Step 406: The terminal device sends an access request to a second satellite.

The terminal device sends the access request to the second satellite, so that the terminal device accesses a core network via the second satellite, and does not communicate with the first satellite when there is a blockage and communication quality is poor, to recover communication of the terminal device, thereby improving communication quality of the terminal device, and meeting the communication requirement of the terminal device.

Optionally, the second satellite is a high-layer satellite of the first satellite.

Implementation 2: The second parameter is a first time window. Correspondingly, the second condition determined based on the second parameter is that a reception time of the terminal device for the reference signal is in the first time window. The first time window is a time range in which communication quality is poor and that is determined based on a location relationship between the first satellite and the terminal device. In other words, if the terminal device communicates with the first satellite in the first time window, communication quality cannot meet a communication requirement of the terminal device. For example, when the terminal device is an internet of things device with a fixed location, it may be determined, based on an ephemeris of the first satellite and location information of the terminal device, that there may be a blockage between the terminal device and the first satellite within a time range from t1 to t2. For example, a flightcraft with an altitude lower than that of the first satellite passes between the terminal device and the first satellite within a time period from t1 to t2. In this case, the time period from t1 to t2 is the first time window.

Optionally, the first time window may include a start time and an end time, for example, t1 and t2. Alternatively, the first time window may include a start time and a duration of the first time window, for example, t1 and l, where l represents the duration of the first time window. In the foregoing two cases, the first time window may be preconfigured in the terminal device, or may be sent by the first satellite to the terminal device.

Alternatively, the first time window may further include a start time offset and an end time offset, or include a start time offset and a length of the first time window. The start time offset indicates a difference between the start time of the first time window and a first reference time, and the end time offset indicates a difference between the end time of the first time window and the first reference time. The first reference time may be a time at which the first satellite sends information about the first time window (that is, a second reference), or the first reference time may be notified by the first satellite to the terminal device, or the first reference time may be another time agreed on in advance. For example, the first satellite determines that the first time window is (t1, t2), the first satellite sends the information about the first time window to the terminal device at a moment t0, and the first reference time is the moment t0. In this case, the first satellite may send the start time offset ΔT1=t1-t0 and the end time offset ΔT2=t2-t0 to the terminal device.

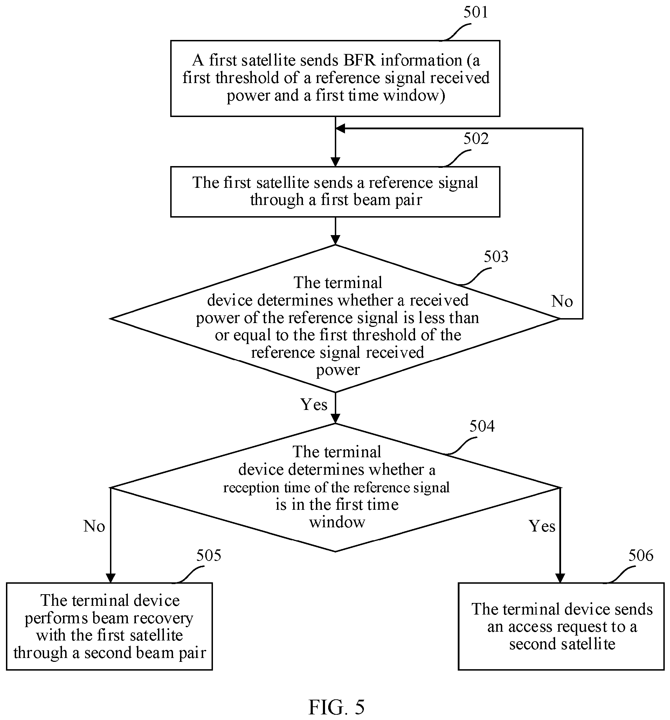

In a specific embodiment, the first parameter is a first threshold of the reference signal received power, and the second parameter is a first time window. In this case, the beam recovery method provided in this embodiment of this application may be shown in FIG. 5.

Step 501: A first satellite sends BFR information, where the BFR information includes a first threshold of a reference signal received power and a first time window.

The first threshold of the reference signal received power is the first parameter, and the first time window is the second parameter. Correspondingly, a first condition is that a received power of a reference signal is less than or equal to the first threshold of the reference signal received power, and a second condition is that a reception time of a reference signal is in the first time window.

The first time window may specifically include a start time t1 and an end time t2, or include a start time t1 and a time window length 1, or include a start time offset ΔT1 and an end time offset ΔT2, or include a start time offset ΔT1 and a time window length l. For example, the first reference time is a time at which the first satellite sends the BFR information. If the first time window sent by the first satellite includes the start time offset ΔT1 and the end time offset ΔT2, or the start time offset ΔT1 and the time window length 1, a terminal device may determine the first time window based on a timestamp in the BFR information, the start time offset ΔT1, and the end time offset ΔT2 (or the time window length 1). Alternatively, a terminal device may determine the first time window based on a time at which the BFR information is received, the start time offset ΔT1, and the end time offset ΔT2 (or the time window length 1).

The reference signal may include an SSB and/or a CSI-RS.

Optionally, the BFR information may include a candidate beam list, and may further include a first threshold quantity and a second threshold quantity.

Optionally, the BFR information may alternatively not include the first parameter and the second parameter, or the first satellite does not perform step 501, but pre-configures the first parameter and the second parameter in the terminal device.

Step 502: The first satellite sends the reference signal through a first beam pair.

The first beam pair is a beam pair used for downlink transmission between the current terminal device and the first satellite.

The reference signal sent by the first satellite in this step corresponds to the first parameter. For example, if the first parameter is a first threshold of a received power of the SSB, the reference signal sent by the first satellite in step 502 is the SSB; or if the first parameter is a first threshold of a received power of the CSI-RS, the reference signal sent by the first satellite in step 502 is the CSI-RS.

Step 503: The terminal device determines whether the received power of the reference signal is less than or equal to the first threshold of the reference signal received power.

The terminal device determines whether the received reference signal meets the first condition, that is, whether the received power of the reference signal is less than or equal to the first threshold of the reference signal received power.

If the received reference signal does not meet the first condition, it is considered that the currently used first beam pair can meet a communication requirement of the terminal device, and beam pair switching does not need to be performed. Step 502 and step 503 may be repeatedly performed until the reference signal received by the terminal device meets the first condition.

If the received reference signal meets the first condition, it is considered that the currently used first beam pair cannot meet a communication requirement of the terminal device, and beam pair switching needs to be performed, and step 504 continues to be performed.

When the terminal device further obtains a first quantity threshold, in step 503, the terminal device specifically determines whether a quantity of reference signals whose received powers each are less than or equal to the first threshold and that are received within a first time reaches the first quantity threshold.

Step 504: The terminal device determines whether the reception time of the reference signal is in the first time window.

If it is determined that the reception time of the reference signal is not in the first time window, it is considered that the terminal device may attempt to switch to another beam of the first satellite for communication. Although the currently used first beam pair cannot meet a communication requirement of the terminal device, another beam pair with the first satellite may meet the communication requirement of the terminal device. In this case, step 505 is performed.

If it is determined that the reception time of the reference signal is in the first time window, it is considered that there is a blockage between the terminal device and the first satellite, all beam pairs between the terminal device and the first satellite cannot meet a communication requirement of the terminal device, and the terminal device needs to switch to another satellite for communication. In this case, the terminal device performs step 506.

When the terminal device further obtains a second quantity threshold, in step 504, the terminal device specifically determines whether a quantity of reference signals that meet both the first condition and the second condition and that are received within a second time reaches the second quantity threshold, where the second time is the first time window.

Step 505: The terminal device performs beam recovery with the first satellite through a second beam pair.

Optionally, the terminal device sends an access request to the first satellite through the second beam pair, so that the terminal device communicates with the first satellite through the second beam pair, and does not perform communication through the first beam pair that is blocked and has poor communication quality, thereby improving communication quality of the terminal device, and meeting the communication requirement of the terminal device. Alternatively, the terminal device may train the beam pair in advance and wirelessly send an access request to quickly implement beam switching.

Step 506: The terminal device sends an access request to a second satellite.

The terminal device sends the access request to the second satellite, so that the terminal device accesses a core network via the second satellite, and does not communicate with the first satellite when there is a blockage and communication quality is poor, to recover communication of the terminal device, thereby improving communication quality of the terminal device, and meeting the communication requirement of the terminal device.

Optionally, the second satellite is a high-layer satellite of the first satellite.

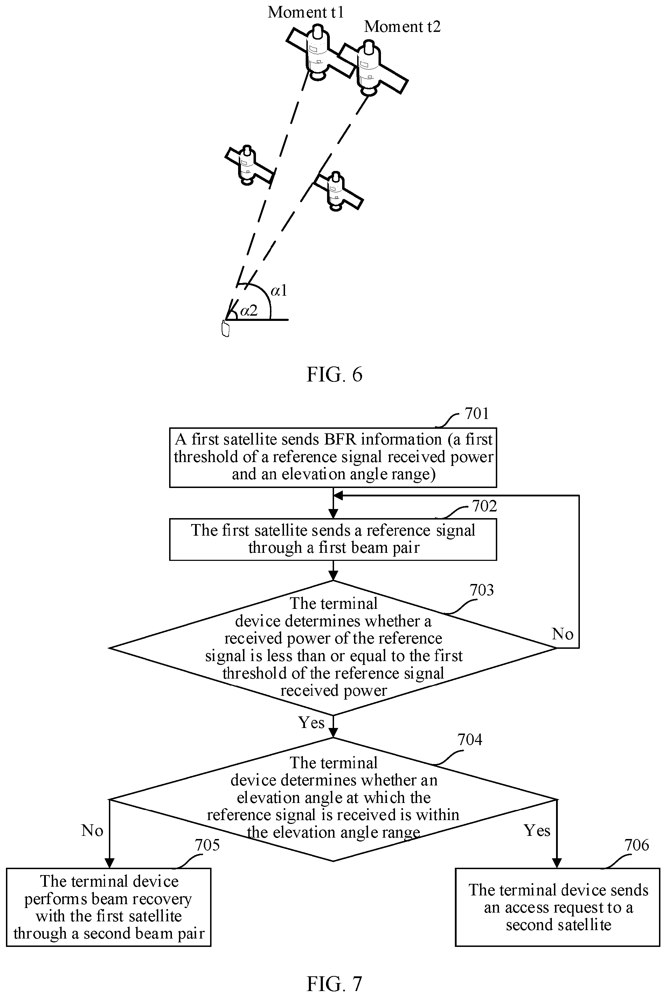

Implementation 3: The second parameter may also be a range of elevation angles formed between the terminal device and the first satellite. Correspondingly, the second condition determined based on the second parameter is that an elevation angle at which the terminal device receives the reference signal is within the range of the elevation angle. The range of elevation angles is an elevation angle range in which communication quality is poor and that is determined based on a location relationship between the first satellite and the terminal device. In other words, if the terminal device communicates with the first satellite within the elevation angle range, communication quality cannot meet a communication requirement of the terminal device. For example, when the terminal device is an internet of things device with a fixed location, it may be determined, based on an ephemeris of the first satellite and location information of the terminal device, that there may be a blockage between the terminal device and the first satellite within an elevation angle range from α1 to α2. For example, when a flightcraft with an altitude lower than that of the first satellite passes between the terminal device and the first satellite, the elevation angle between the terminal device and the first satellite is from α1 to α2, as shown in FIG. 6.

Optionally, the range of elevation angles may include a start angle for the elevation angle and an end angle for the elevation angle, for example, α1 and α2. Alternatively, the range of elevation angles may include a start angle for the elevation angle and an elevation angle span, for example, α1 and k, where k represents the elevation angle span, that is, α2-α1. In the foregoing two cases, the range of elevation angles may be preconfigured in the terminal device, or may be sent by the first satellite to the terminal device.

Alternatively, the range of elevation angles may further include a start angle offset and an end angle offset, or include a start angle offset and an elevation angle span. The start angle offset indicates an offset between the start angle of the elevation angle range and a first reference elevation angle, and the end angle offset indicates an offset between the end angle of the elevation angle range and the first reference elevation angle. The first reference elevation angle may be an elevation angle at which the first satellite sends information about the first time window (that is, a second reference), or the first reference elevation angle may be notified by the first satellite to the terminal device, or the first reference elevation angle may be another elevation angle agreed on in advance. For example, the first satellite determines that the elevation angle range is (α1, α2), the first satellite sends information about the elevation angle range to the terminal device when the elevation angle is α0, and the first reference elevation angle is α0. In this case, the first satellite may send the start angle offset Δα1=α1-α0 and the end angle offset Δα2=α2-α0 to the terminal device, or send the start angle offset Δα1=α1-α0 and the elevation angle span k=α2-α1 to the terminal device.

In a specific embodiment, the first parameter is a first threshold of the reference signal received power, and the second parameter is an elevation angle range. In this case, the beam recovery method provided in this embodiment of this application may be shown in FIG. 7.

Step 701: A first satellite sends BFR information, where the BFR information includes a first threshold of a reference signal received power and an elevation angle range.

The first threshold of the reference signal received power is the first parameter, and the elevation angle range is the second parameter. Correspondingly, a first condition is that a received power of a reference signal is less than or equal to the first threshold of the reference signal received power, and a second condition is that an elevation angle at which a terminal device receives a reference signal is in the elevation angle range.

The elevation angle range may specifically include a start angle α1 and an end angle α2, or include a start angle α1 and an elevation angle span k, or include a start angle offset Δα1 and an end angle offset Δα2, or include a start angle offset Δα1 and an elevation angle span k. For example, the first reference elevation angle is an elevation angle at which the first satellite sends the BFR information. If the elevation angle range within which the first satellite performs sending includes the start angle offset Δα1 and the end angle offset Δα2 (or the elevation angle span k), the terminal device may determine the elevation angle range based on an elevation angle at which the terminal device receives the BFR information, the start angle offset Δα1, and the end angle offset Δα2 (or the elevation angle span k).

The reference signal may include an SSB and/or a CSI-RS.

Optionally, the BFR information may include a candidate beam list, and may further include a first threshold quantity and a second threshold quantity.

Optionally, the BFR information may alternatively not include the first parameter and the second parameter, or the first satellite does not perform step 701, but pre-configures the first parameter and the second parameter in the terminal device.

Step 702: The first satellite sends the reference signal through a first beam pair.

The first beam pair is a beam pair used for downlink transmission between the current terminal device and the first satellite.

The reference signal sent by the first satellite in this step corresponds to the first parameter. For example, if the first parameter is a first threshold of a received power of the SSB, the reference signal sent by the first satellite in step 702 is the SSB; or if the first parameter is a first threshold of a received power of the CSI-RS, the reference signal sent by the first satellite in step 702 is the CSI-RS.

Step 703: The terminal device determines whether the received power of the reference signal is less than or equal to the first threshold of the reference signal received power.

The terminal device determines whether the received reference signal meets the first condition, that is, whether the received power of the reference signal is less than or equal to the first threshold of the reference signal received power.

If the received reference signal does not meet the first condition, it is considered that the currently used first beam pair can meet a communication requirement of the terminal device, and beam pair switching does not need to be performed. Step 702 and step 703 may be repeatedly performed until the reference signal received by the terminal device meets the first condition.

If the received reference signal meets the first condition, it is considered that the currently used first beam pair cannot meet a communication requirement of the terminal device, and beam pair switching needs to be performed, and step 704 continues to be performed.

When the terminal device further obtains a first quantity threshold, in step 703, the terminal device specifically determines whether a quantity of reference signals whose received powers each are less than or equal to the first threshold and that are received within a first time reaches the first quantity threshold.

Step 704: The terminal device determines whether the elevation angle at which the reference signal is received is within the elevation angle range.

If it is determined that the elevation angle at which the reference signal is received is not in the elevation angle range, it is considered that the terminal device may attempt to switch to another beam of the first satellite for communication. Although the currently used first beam pair cannot meet a communication requirement of the terminal device, another beam pair with the first satellite may meet the communication requirement of the terminal device. In this case, step 705 is performed.

If it is determined that the elevation angle at which the reference signal is received is in the elevation angle range, it is considered that there is a blockage between the terminal device and the first satellite, all beam pairs between the terminal device and the first satellite cannot meet a communication requirement of the terminal device, and the terminal device needs to switch to another satellite for communication. In this case, the terminal device performs step 706.

When the terminal device further obtains a second quantity threshold, in step 704, the terminal device specifically determines whether a quantity of reference signals that meet the first condition and that are received within the elevation angle range and within a second time reaches the second quantity threshold, where the second time may be a time period corresponding to the elevation angle range, and the time period corresponding to the elevation angle range is an interval during which an elevation angle, determined based on a satellite movement trajectory and a terminal location, remains within the elevation angle range, or the second time may be shorter than a time period corresponding to the elevation angle range.

Step 705: The terminal device performs beam recovery with the first satellite through a second beam pair.

Optionally, the terminal device sends an access request to the first satellite through the second beam pair, so that the terminal device communicates with the first satellite through the second beam pair, and does not perform communication through the first beam pair that is blocked and has poor communication quality, thereby improving communication quality of the terminal device, and meeting the communication requirement of the terminal device. Alternatively, the terminal device may train the beam pair in advance and wirelessly send an access request to quickly implement beam switching.

Step 706: The terminal device sends an access request to a second satellite.

The terminal device sends the access request to the second satellite, so that the terminal device accesses a core network via the second satellite, and does not communicate with the first satellite when there is a blockage and communication quality is poor, to recover communication of the terminal device, thereby improving communication quality of the terminal device, and meeting the communication requirement of the terminal device.

Optionally, the second satellite is a high-layer satellite of the first satellite.

Implementation 4: The second parameter may alternatively be a start threshold of a first timer and a duration of the first timer, and the threshold is a threshold of an elevation angle between the terminal device and the first satellite. Correspondingly, the second condition determined based on the second parameter is that the first timer is running at the moment the terminal device receives the reference signal. The first timer is determined based on an elevation angle range and a duration indicating poor communication quality, which are determined based on a location relationship between the first satellite and the terminal device. In other words, if the terminal device communicates with the first satellite while the first timer is running, communication quality cannot meet a communication requirement of the terminal device. For example, when the terminal device is an internet of things device with a fixed location, it may be determined, based on an ephemeris of the first satellite and location information of the terminal device, that there may be a blockage between the terminal device and the first satellite starting from an elevation angle α1. For example, a flightcraft with an altitude lower than that of the first satellite passes between the terminal device and the first satellite and lasts for a duration T1. In this case, the start threshold of the first timer is the elevation angle α1, and the duration is T1.

After the terminal device obtains the second parameter, the first timer is started when the elevation angle formed between the terminal device and the first satellite reaches α1, and the first timer is stopped when timing of the first timer reaches the duration T1.

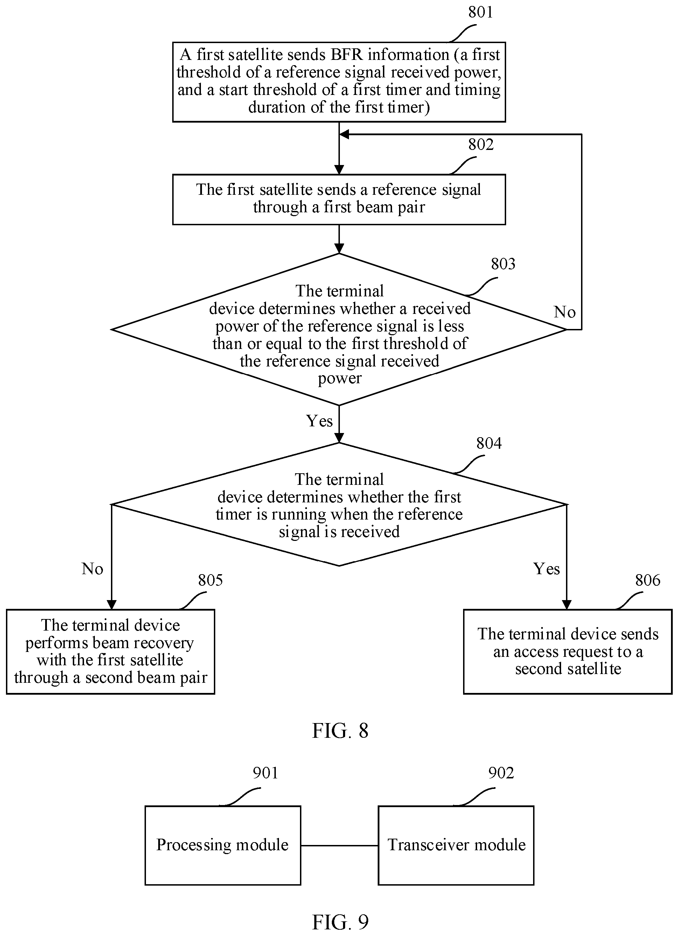

In a specific embodiment, the first parameter is a first threshold of the reference signal received power, and the second parameter is a start threshold of a first timer and a duration of the first timer. In this case, the beam recovery method provided in this embodiment of this application may be shown in FIG. 8.

Step 801: A first satellite sends BFR information, where the BFR information includes a first threshold of a reference signal received power, and a start threshold of a first timer and a duration of the first timer.

The first threshold of the reference signal received power is the first parameter, and the start threshold of the first timer and the duration of the first timer are the second parameter. Correspondingly, a first condition is that a received power of a reference signal is less than or equal to the first threshold of the reference signal received power, and a second condition is that a first timer is running at the moment a terminal device receives a reference signal.

The reference signal may include an SSB and/or a CSI-RS.

Optionally, the BFR information may include a candidate beam list, and may further include a first threshold quantity and a second threshold quantity.

Optionally, the BFR information may alternatively not include the first parameter and the second parameter, or the first satellite does not perform step 801, but pre-configures the first parameter and the second parameter in the terminal device.

Step 802: The first satellite sends the reference signal through a first beam pair.

The first beam pair is a beam pair used for downlink transmission between the current terminal device and the first satellite.

The reference signal sent by the first satellite in this step corresponds to the first parameter. For example, if the first parameter is a first threshold of a received power of the SSB, the reference signal sent by the first satellite in step 802 is the SSB; or if the first parameter is a first threshold of a received power of the CSI-RS, the reference signal sent by the first satellite in step 802 is the CSI-RS.

Step 803: The terminal device determines whether the received power of the reference signal is less than or equal to the first threshold of the reference signal received power.

The terminal device determines whether the received reference signal meets the first condition, that is, whether the received power of the reference signal is less than or equal to the first threshold of the reference signal received power.

If the received reference signal does not meet the first condition, it is considered that the currently used first beam pair can meet a communication requirement of the terminal device, and beam pair switching does not need to be performed. Step 802 and step 803 may be repeatedly performed until the reference signal received by the terminal device meets the first condition.

If the received reference signal meets the first condition, it is considered that the currently used first beam pair cannot meet a communication requirement of the terminal device, and beam pair switching needs to be performed, and step 804 continues to be performed.

When the terminal device further obtains a first quantity threshold, in step 803, the terminal device specifically determines whether a quantity of reference signals whose received powers each are less than or equal to the first threshold and that are received within a first time reaches the first quantity threshold.

Step 804: The terminal device determines whether the first timer is running at the moment the reference signal is received.

If it is determined that the first timer does not run when the reference signal is received, it is considered that the terminal device may attempt to switch to another beam of the first satellite for communication. Although the currently used first beam pair cannot meet a communication requirement of the terminal device, another beam pair with the first satellite may meet the communication requirement of the terminal device. In this case, step 805 is performed.

If it is determined that the first timer is running at the moment the reference signal is received, it is considered that there is a blockage between the terminal device and the first satellite, all beam pairs between the terminal device and the first satellite cannot meet a communication requirement of the terminal device, and the terminal device needs to switch to another satellite for communication. In this case, the terminal device performs step 806.

When the terminal device further obtains a second quantity threshold, in step 804, the terminal device specifically determines whether a quantity of reference signals that meet the first condition and that are received during running of the first timer and within a second time reaches the second quantity threshold, where the second time may be a duration of the first timer, or the second time may be shorter than a duration of the first timer.

Step 805: The terminal device performs beam recovery with the first satellite through a second beam pair.

Optionally, the terminal device sends an access request to the first satellite through the second beam pair, so that the terminal device communicates with the first satellite through the second beam pair, and does not perform communication through the first beam pair that is blocked and has poor communication quality, thereby improving communication quality of the terminal device, and meeting the communication requirement of the terminal device. Alternatively, the terminal device may train the beam pair in advance and wirelessly send an access request to quickly implement beam switching.

Step 806: The terminal device sends an access request to a second satellite.

The terminal device sends the access request to the second satellite, so that the terminal device accesses a core network via the second satellite, and does not communicate with the first satellite when there is a blockage and communication quality is poor, to recover communication of the terminal device, thereby improving communication quality of the terminal device, and meeting the communication requirement of the terminal device.

Optionally, the second satellite is a high-layer satellite of the first satellite.

In the beam recovery method provided in the foregoing embodiment of this application, beam recovery can be quickly performed when a beam failure occurs in a satellite communication system. Specifically, the terminal device may quickly select a beam recovery strategy, based on the first condition determined based on the first parameter and the second condition determined based on the second parameter. It can decide whether to switch beam pairs on a same satellite or switch to another satellite for communication. This prevents the terminal device from continuously sending access requests to a currently serving satellite when there is actually an obstruction between the two that prevents communication. Otherwise, this would increase power consumption of the terminal device and interfere with other uplink signals.

FIG. 9 is a diagram of a communication apparatus according to an embodiment of this application. The communication apparatus includes a processing module 901 and a transceiver module 902. The processing module 901 is configured to implement data processing performed by the communication apparatus. The transceiver module 902 is configured to receive content between the communication apparatus and another unit or network element, or send content between the communication apparatus and another unit or network element. It should be understood that, in this embodiment of this application, the processing module 901 may be implemented by a processor or a processor-related circuit component (also referred to as a processing circuit), and the transceiver module 902 may be implemented by a receiver/transmitter or a receiver/transmitter-related circuit component.

For example, the communication apparatus may be a communication apparatus device, or may be a chip used in a communication apparatus device or another combined device or component with a function of the communication apparatus device.

When the communication apparatus is a terminal device, the processing module 901 obtains a first parameter and a second parameter; the transceiver module 902 receives a reference signal through a first beam pair; the transceiver module 902 sends an access request to the first satellite through a second beam pair if the reference signal meets a first condition determined based on the first parameter but does not meet a second condition determined based on the second parameter; and the transceiver module 902 sends an access request to a second satellite if the reference signal meets both the first condition and the second condition.

In addition, the foregoing modules may be further configured to support another process performed by the terminal device in embodiments shown in FIG. 3 to FIG. 8. For beneficial effect, refer to the foregoing descriptions. Details are not described herein again.

When the communication apparatus is a first satellite, the processing module 901 sends a first parameter and a second parameter to a terminal device via the transceiver module 902, where the first parameter is used to determine a first condition, and the second parameter is used to determine a second condition; and the transceiver module 902 sends a reference signal to the terminal device through a first beam pair, where the reference signal, the first condition, and the second condition are used by the terminal device to perform satellite beam switching.

In addition, the foregoing modules may be further configured to support another process performed by the first satellite in embodiments shown in FIG. 3 to FIG. 8. For beneficial effect, refer to the foregoing descriptions. Details are not described herein again.

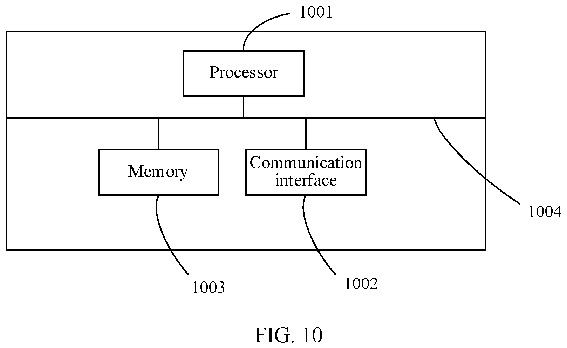

FIG. 10 is a diagram of another communication apparatus according to an embodiment of this application. The communication apparatus includes a processor 1001 and a communication interface 1002, and may further include a memory 1003 and a bus 1004. The processor 1001, the communication interface 1002, and the memory 1003 may be connected to each other through a bus 1004. The bus 1004 may be a peripheral component interconnect (peripheral component interconnect, PCI) bus, an extended industry standard architecture (extended industry standard architecture, EISA) bus, or the like. The bus 1004 may be classified into an address bus, a data bus, a control bus, and the like. For ease of representation, the bus is represented by using only one line in FIG. 10. However, it does not mean that there is only one bus or only one type of bus.

The processor 1001 may be a central processing unit (central processing unit, CPU), a network processor (network processor, NP), or a combination of a CPU and an NP. The processor may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field programmable gate array (field programmable gate array, FPGA), generic array logic (Generic Array Logic, GAL), or any combination thereof. The memory 1003 may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache.

The processor 1001 is configured to implement a data processing operation of the communication apparatus. The communication interface 1002 is configured to implement a receiving operation and a sending operation of the communication apparatus.

When the communication apparatus is a terminal device, the processor 1001 obtains a first parameter and a second parameter; receives, through the communication interface 1002, a reference signal through a first beam pair; sends, through the communication interface 1002, an access request to the first satellite through a second beam pair if the reference signal meets a first condition determined based on the first parameter but does not meet a second condition determined based on the second parameter; and sends through the communication interface 1002, an access request to a second satellite if the reference signal meets both the first condition and the second condition.

In addition, the foregoing modules may be further configured to support another process performed by the terminal device in embodiments shown in FIG. 3 to FIG. 8. For beneficial effect, refer to the foregoing descriptions. Details are not described herein again.

When the communication apparatus is a first satellite, the processor 1001 sends a first parameter and a second parameter to a terminal device through the communication interface 1002, where the first parameter is used to determine a first condition, and the second parameter is used to determine a second condition; and sends, through the communication interface 1002, a reference signal to the terminal device through a first beam pair, where the reference signal, the first condition, and the second condition are used by the terminal device to perform satellite beam switching.

In addition, the foregoing modules may be further configured to support another process performed by the first satellite in embodiments shown in FIG. 3 to FIG. 8. For beneficial effect, refer to the foregoing descriptions. Details are not described herein again.

Based on a same technical concept, an embodiment of this application further provides a communication system, including a terminal device and at least one communication satellite (for example, the first satellite and the second satellite in the foregoing method embodiments).

Based on a same technical concept, an embodiment of this application further provides a computer-readable storage medium. The computer-readable storage medium stores computer-readable instructions. When the computer-readable instructions are run on a computer, the method according to any one of the foregoing possible implementations is performed.

An embodiment of this application provides a computer program product including instructions. When the instructions are run on a computer, the foregoing method embodiments are performed.

An embodiment of this application provides a chip, including a processor. The processor is coupled to a memory, the memory is configured to store instructions, and when the instructions are executed by the processor, the chip is enabled to implement the method steps performed by any one of the foregoing nodes.

In descriptions of embodiments of this application, the term "and/or" describes an association relationship between associated objects and indicates that three relationships may exist. For example, A and/or B may indicate the following three cases: Only A exists, both A and B exist, and only B exists. "A plurality of" in this application means two or more.

In addition, it should be understood that in description of this application, terms such as "first" and "second" are merely used for distinguishing and description, but should not be understood as indicating or implying relative importance, or should not be understood as indicating or implying a sequence. Reference to "one embodiment", "some embodiments", or the like described in this specification means that a specific feature, structure, or characteristic described with reference to the embodiment is included in one or more embodiments of this application. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk drive, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a base station or a terminal. Certainly, the processor and the storage medium may exist in a base station or terminal as discrete components.

All or a part of the foregoing embodiments may be implemented by using software, hardware, firmware, or any combination thereof. When software is used to implement embodiments, all or a part of embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise stated or if there is a logic conflict, terms and/or descriptions in different embodiments are consistent and may be mutually referenced, and technical features in different embodiments may be combined into a new embodiment based on an internal logical relationship thereof.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A beam recovery method, wherein the method comprises:
obtaining, by a terminal device, a first parameter and a second parameter;
receiving, by the terminal device, a reference signal through a first beam pair;
performing, by the terminal device, beam recovery with the first satellite through a second beam pair if the reference signal meets a first condition determined based on the first parameter but does not meet a second condition determined based on the second parameter; and
sending, by the terminal device, an access request to a second satellite if the reference signal meets both the first condition and the second condition.

2. The method according to claim 1, wherein the first parameter is a first threshold; and
the first condition is that a received power of the reference signal is less than or equal to the first threshold.

3. The method according to claim 2, wherein the second parameter is a second threshold of a reference signal received power, and the first threshold is greater than the second threshold; and
the second condition is that the received power of the reference signal is less than or equal to the second threshold.

4. The method according to claim 2 or 3, wherein the reference signal comprises a synchronization signal block SSB or a channel state information reference signal CSI-RS.

5. The method according to claim 1 or 2, wherein the second parameter is a first time window; and
the second condition is that a reception time of the reference signal is in the first time window.

6. The method according to claim 5, wherein the first time window comprises a start time and an end time, or comprises a start time and a duration of the first time window, or comprises a start time offset and an end time offset; and
the start time offset indicates a difference between the start time of the first time window and a first reference time, and the end time offset indicates a difference between the end time of the first time window and the first reference time.

7. The method according to claim 1 or 2, wherein the second parameter is a range of elevation angles formed between the terminal device and the first satellite; and
the second condition is that an elevation angle formed between the terminal device and the first satellite when the reference signal is received is within the range.

8. The method according to claim 7, wherein the range comprises a start angle and an end angle for the elevation angle, or a start angle offset and an end angle offset; and
the start angle offset indicates an offset between the start angle of the range and a first reference elevation angle, and the end angle offset indicates an offset between the end angle of the range and the first reference elevation angle.

9. The method according to claim 1 or 2, wherein the second parameter is a start threshold of a first timer and a duration of the first timer, and the threshold is a threshold of an elevation angle between the terminal device and the first satellite; and
the second condition is that the first timer is running at the moment the terminal device receives the reference signal.

10. The method according to any one of claims 1 to 9, wherein obtaining, by the terminal device, the first parameter and the second parameter comprises:
receiving, by the terminal device, beam failure recovery BFR information sent by the first satellite, wherein the BFR information comprises the first parameter and the second parameter.

11. The method according to any one of claims 1 to 10, wherein the second satellite operates at a higher altitude than the first satellite.

12. The method according to any one of claims 1 to 11, wherein the method further comprises:
obtaining, by the terminal device, a first quantity threshold; and
performing, by the terminal device, beam recovery with the first satellite through the second beam pair if the reference signal meets the first condition determined based on the first parameter but does not meet the second condition determined based on the second parameter comprises:
performing, by the terminal device, beam recovery with the first satellite through the second beam pair if a quantity of reference signals that meet the first condition but do not meet the second condition and that are received by the terminal device within a first time reaches the first quantity threshold.

13. The method according to any one of claims 1 to 12, wherein the method further comprises:
obtaining, by the terminal device, a second quantity threshold; and
sending, by the terminal device, the access request to the second satellite if the reference signal meets both the first condition and the second condition comprises:
sending, by the terminal device, the access request to the second satellite if a quantity of reference signals that meet both the first condition and the second condition and that are received by the terminal device within a second time reaches the second quantity threshold.

14. A beam recovery method, wherein the method comprises:
sending, by a first satellite, a first parameter and a second parameter to a terminal device, wherein the first parameter is used to determine a first condition, and the second parameter is used to determine a second condition; and
sending, by the first satellite, a reference signal to the terminal device through a first beam pair, wherein the reference signal, the first condition, and the second condition are used by the terminal device to perform satellite beam recovery.

15. The method according to claim 14, wherein the method further comprises:
performing, by the first satellite, beam recovery with the terminal device through a second beam pair if the reference signal received by the terminal device meets the first condition but does not meet the second condition.

16. The method according to claim 14 or 15, wherein the first parameter is a first threshold; and
the first condition is that a received power of the reference signal is less than or equal to the first threshold.

17. The method according to claim 16, wherein the second parameter is a second threshold of a reference signal received power, and the first threshold is greater than the second threshold; and
the second condition is that the received power of the reference signal is less than or equal to the second threshold.

18. The method according to claim 16 or 17, wherein the reference signal comprises a synchronization signal block SSB or a channel state information reference signal CSI-RS.

19. The method according to any one of claims 14 to 16, wherein the second parameter is a first time window; and
the second condition is that a reception time of the reference signal is in the first time window.

20. The method according to claim 19, wherein the first time window comprises a start time and an end time, or comprises a start time and a duration of the first time window, or comprises a start time offset and an end time offset; and
the start time offset indicates a difference between the start time of the first time window and a first reference time, and the end time offset indicates a difference between the end time of the first time window and the first reference time.

21. The method according to any one of claims 14 to 16, wherein the second parameter is a range of elevation angles formed between the terminal device and the first satellite; and
the second condition is that an elevation angle formed between the terminal device and the first satellite when the reference signal is received is within the range.

22. The method according to claim 21, wherein the range comprises a start angle and an end angle for the elevation angle, or a start angle offset and an end angle offset; and
the start angle offset indicates an offset between the start angle of the range and a first reference elevation angle, and the end angle offset indicates an offset between the end angle of the range and the first reference elevation angle.

23. The method according to any one of claims 14 to 16, wherein the second parameter is a start threshold of a first timer and a duration of the first timer, and the threshold is a threshold of an elevation angle between the terminal device and the first satellite; and
the second condition is that the first timer is running at the moment the terminal device receives the reference signal.

24. The method according to any one of claims 14 to 23, wherein sending, by the first satellite, the first parameter and the second parameter comprises:
sending, by the first satellite, beam failure recovery BFR information, wherein the BFR information comprises the first parameter and the second parameter.

25. The method according to any one of claims 14 to 24, wherein the second satellite operates at a higher altitude than the first satellite.

26. The method according to claim 15, wherein the method further comprises:
sending, by the first satellite, a first quantity threshold to the terminal device; and
that the reference signal received by the terminal device meets the first condition but does not meet the second condition comprises:
a quantity of reference signals that meet the first condition but do not meet the second condition, that are sent by the first satellite through the first beam pair, and that are received by the terminal device within a first time reaches the first quantity threshold.

27. The method according to claim 15, wherein the method further comprises:
sending, by the first satellite, a second quantity threshold to the terminal device; and
that the reference signal received by the terminal device meets both the first condition and the second condition comprises:
a quantity of reference signals that meet both the first condition and the second condition, that are sent by the first satellite through the first beam pair, and that are received by the terminal device within a second time reaches the second quantity threshold.

28. A communication apparatus, comprising a processor, wherein the processor is coupled to a memory, the memory is configured to store a program or instructions, and when the program or the instructions are executed by the processor, the apparatus is enabled to perform the method according to any one of claims 1 to 13.

29. A communication apparatus, comprising a processor, wherein the processor is coupled to a memory, the memory is configured to store a program or instructions, and when the program or the instructions are executed by the processor, the apparatus is enabled to perform the method according to any one of claims 14 to 27.

30. A communication system, comprising the communication apparatus according to claim 28 and at least one communication apparatus according to claim 29.

31. A computer-readable storage medium, wherein the computer-readable storage medium stores instructions, and when the instructions are run on a computer, the computer is enabled to perform the method according to any one of claims 1 to 27.

32. A computer program product comprising instructions, wherein when the instructions are run on a computer, the computer is enabled to perform the method according to any one of claims 1 to 27.
